# EUROPÄISCHE PATENTSCHRIFT

(11) **EP 1 419 331 B1**
(45) Veröffentlichungstag und Bekanntmachung des Hinweises auf die Patenterteilung: **26.01.2005**
(21) Anmeldenummer: 02767112.2
(22) Anmeldetag: 19.08.2002
(51) Int. Cl.: F16K 1/22

(54) **DROSSELKLAPPENANORDNUNG**
THROTTLE VALVE ARRANGEMENT
ENSEMBLE PAPILLON DES GAZ

(30) Priorität: 23.08.2001 DE 10140410
(43) Veröffentlichungstag der Anmeldung: 19.05.2004
(73) Patentinhaber: SIEMENS AKTIENGESELLSCHAFT, 80333 München (DE)
(72) Erfinder: VOGLER, Hans-Ulrich, 60385 Frankfurt/Main (DE)
(86) Internationale Anmeldenummer: PCT/DE2002/003041
(87) Internationale Veröffentlichungsnummer: WO 2003/019054

(56) Entgegenhaltungen:
- DE-A- 2 516 190
- DE-A- 3 721 624
- DE-A- 19 841 181
- US-A- 3 567 180
- US-A- 3 568 975
- US-A- 3 666 235
- US-A- 3 675 681
- US-A- 4 325 536
- US-A- 4 899 775

## Beschreibung

Die Erfindung bezieht sich auf eine Drosselklappenanordnung nach dem Oberbegriff des Anspruchs 1. Eine derartige Drosselklappenanordnung ist aus den Dokumenten US 3 675 681, US 3 567 180, US 3 666 235 und US 3 568 975 bekannt.

Bei derartigen Drosselklappenanordnungen ist es bekannt, in einen axialen Schlitz in der Drosselklappenwelle die Drosselklappe einzuführen. Quer zur Drosselklappenebene sind in der Drosselklappenwelle Bohrungen und Gewindebohrungen und damit fluchtend in der Drosselklappe Ausnehmungen ausgebildet, in die Schrauben zur Befestigung der Drosselklappe an der Drosselklappenwelle eingeschraubt sind. Zur Sicherung der Schrauben gegen unbeabsichtigtes Lösen besitzen die Schrauben noch Schraubensicherungen. Dieser Aufbau ist aufwendig und montageintensiv.

Darüber hinaus führen die additiven Herstellungstoleranzen von Drosselklappe, Drosselklappenwelle, axialem Schlitz und den Gewindebohrungen und Ausnehmungen zu einem relativ großen Spiel der Drosselklappe in der Durchströmöffnung des Drosselklappenstutzens und damit zu einer relativ hohen Leckrate bei geschlossener Drosselklappe.

Aufgabe der Erfindung ist es daher, eine Drosselklappenanordnung der eingangs genannten Art zu schaffen, die aus wenigen, einfachen Bauteilen besteht, leicht montierbar ist und nur eine geringe Leckrate bei geschlossener Drosselklappe aufweist.

Diese Aufgabe wird erfindungsgemäß durch die Merkmale des Anspruchs 1 gelöst.

Diese Ausbildung benötigt nur wenige, einfache Bauteile.

Zur Montage wird die Drosselklappenwelle durch die Lager im Drosselklappenstutzen und die Aufnahmeöffnung in der in die Durchströmöffnung eingesetzten Drosselklappe geführt und erst nach optimierter Positionierung der Drosselklappe in der Durchströmöffnung mittels der Schweißverbindung mit der Drosselklappenwelle fest verbunden. Vor dem Zusammenbau separat hergestellte Gewindebohrungen und Ausnehmungen an der Drosselklappenwelle sind nicht vorhanden und müssen daher bei den Toleranzen nicht berücksichtigt werden, so daß die Drosselklappe mit nur geringem Spiel und trotzdem freigängig in der Durchströmöffnung eingesetzt werden kann, bevor nach deren optimierter Positionierung ihre Befestigung erfolgt. Die Vorrichtung zum Herstellen der Schweißverbindung wird dabei von außen durch die Durchströmöffnung zur Schweißstelle geführt. Die stoffschlüssige Verbindung zwischen den beiden zu verbindenden Bauteilen führt zu einer sehr hohen Sicherheit gegen unbeabsichtigtes Lösen, ohne daß dazu spezielle Sicherungselemente benötigt werden. Dies ist von besonderem Vorteil bei Drosselklappenanordnungen mit kleinen Drosselklappengrößen, die nach herkömmlicher Technik aus Platzgründen nur mit einer einzigen Schraube an der Drosselklappenwelle befestigt werden können und somit ein besonders hohes Risiko zum unbeabsichtigten Lösen der Drosselklappe bilden.

Derartige Drosselklappenanordnungen können vorzugsweise bei sogenannten E-Gas-Systemen für Verbrennungsmotore in Kraftfahrzeugen zur Anwendung kommen. Es sind genauso gut aber auch andere Anwendungen wie z.B. bei Abgasrückführsystemen möglich.

Um bei einer Drosselklappe geringer Dicke die Aufnahmeöffnung für die Drosselklappenwelle ausbilden zu können, wird die Drosselklappe im Bereich der Aufnahmeöffnung nabenartig ausgebildet.

Um auch eine Verbindung von Drosselklappe und Drosselklappenwelle herstellen zu können, wenn diese beiden Bauteile aus unterschiedlichen Materialien bestehen, die nicht miteinander verschweißbar sind, weist die Drosselklappe ein mit ihr fest verbundenes Verbindungselement auf, das in die Ausnehmung der Drosselklappe hineinragt, aus einem mit der Drosselklappenwelle verschweißbaren Material besteht und an seinem in die Ausnehmung ragenden Bereich mit der Drosselklappenwelle verschweißt ist.

Vorzugsweise ragt das Verbindungselement tangential zur Drosselklappenwelle in die Ausnehmung.

Sind zwei Verbindungselemente mit der Drosselklappe fest verbunden angeordnet und ragen einander gegenläufig tangential zur Drosselklappenwelle in die Ausnehmungen, so ist zum einen die Sicherheit gegen unbeabsichtigtes Lösen besonders hoch und zum anderen die Art der Drehmomentbelastung unabhängig von der Drehrichtung immer gleich.

Berühren sich dabei die einander zugewandten Enden der Verbindungselemente zumindest annähernd, so können beide Verbindungselemente gleichzeitig mit einem einzigen Schweißgang mit der Drosselklappenwelle verbunden werden. Eine weitgehend gleichmäßige Drehmomentübertragung über die Breite der Drosselklappe erfolgt dadurch, daß das oder die Verbindungselemente sich zumindest weitgehend über die gesamte Breite der Ausnehmung in Erstrekkungsrichtung der Drosselklappenwelle erstrecken.

Sind in Erstreckungsrichtung der Drosselklappenwelle mehrere Verbindungselemente nebeneinander angeordnet, so ist die Sicherheit zur optimalen Anlage der Verbindungselemente an der Drosselklappenwelle, unabhängig von den Toleranzen ihrer Befestigung an der Drosselklappe sehr hoch.

Die Drosselklappe wird mittels eines Spritzgießverfahrens hergestellt und das Verbindungselement wird als Einlegeteil durch Umspritzen mit dem Material der Drosselklappe bei deren Herstellung fest mit dieser verbunden, und so sind keine gesonderten Montagevorgänge und keine besonderen Befestigungselemente zur Verbindung der Verbindungselemente mit der Drosselklappe erforderlich. Dabei kann das Verbindungselement ein Einlegeblech sein, das federnd mit seinem freien Ende an der Drosselklappenwelle zur Anlage gelangt und so eine große Sicherheit beim Verschweißen von Verbindungselement und Drosselklappenwelle bietet.

Ein besonders einfache Herstellbarkeit ergibt sich, wenn die Drosselklappe ein aus einem Leichtmetall oder aus einem Kunststoff im Spritzgießverfahren hergestelltes Bauteil ist.

Die Drosselklappenwelle kann dabei aus Stahl bestehen und dadurch einen hohen Widerstand gegen Abnutzung in den Lagern des Gehäuses des Drosselklappenstutzens bieten.

Zur besonderen Sicherheit der Verbindung zwischen dem Verbindungselement und der Drosselklappenwelle führt es, wenn das Verbindungselement mit seinem freien Ende unter Vorspannung an der Drosselklappenwelle in Anlage ist.

Ist die Schweißverbindung eine durch Widerstandsschweißen oder Laserschweißen erzeugte Schmelzschweißverbindung, so erfolgt eine Erwärmung der miteinander zu verbindenden Bauteile nur in dem tatsächlichen Schweißbereich. Wärmebelastungen, die zu einem Verziehen oder Beschädigen der Bauteile führen könnten, erfolgen nicht. Weiterhin sind auch die Vorrichtungen zum Widerstandschweißen oder Laserschweißen einfach durch die Durchströmöffnung des Drosselklappenstutzens zu der Schweißstelle führbar.

Die Schweißverbindung kann entweder mittels einer Schweißnaht oder durch einen oder mehrere Schweißpunkte erfolgen.

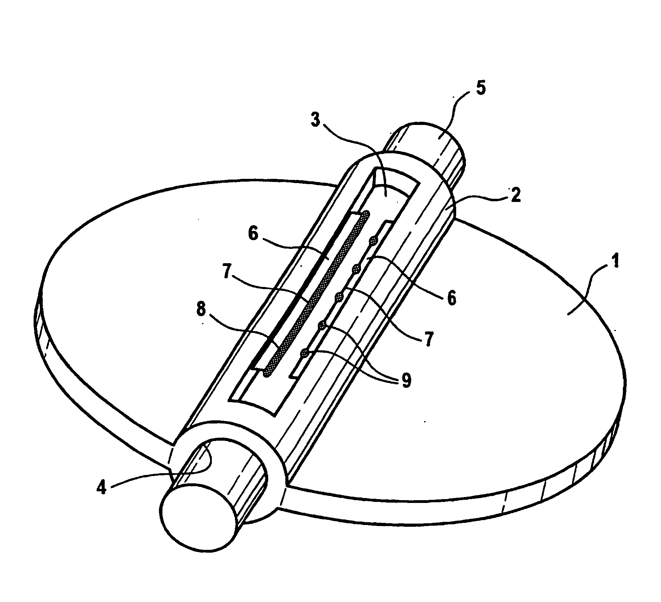

Ein Ausführungsbeispiel der Erfindung ist in der Zeichnung dargestellt und wird im folgenden näher beschrieben. Die einzige Figur der Zeichnung zeigt eine perspektivische Darstellung einer Drosselklappenanordnung.

Die dargestellte Drosselklappenanordnung weist eine aus Kunststoff im Spritzgießverfahren hergestellte Drosselklappe 1 mit einer mittig sich über die Breite der Drosselklappe erstreckenden, einteilig mit der Drosselklappe 1 ausgebildeten Nabe 2 auf.

Rechtwinklig zur Ebene der Drosselklappe 1 ist in der Nabe 2 sich weitgehend über deren Länge erstreckend eine schlitzartige Ausnehmung 3 ausgebildet, die durchgehend ist und in eine durch die Nabenbohrung gebildete Aufnahmeöffnung 4 für eine Drosselklappenwelle 5 mündet, in die die Drosselklappenwelle 5 eingesetzt ist.

An den einander gegenüberliegenden Längsseiten der Ausnehmung 3 sind mit ihren einen Enden bei der Herstellung der Drosselklappe 1 als Einlegebleche in die Nabe 2 mit eingespritzte Verbindungselemente 6 angeordnet, die zueinander gegenläufig tangential zur Drosselklappenwelle 5 in die Ausnehmungen 3 ragen und mit ihren freien Enden 7 unter Vorspannung einer Drosselklappenwelle 5 anliegen.

Sowohl die Verbindungselemente 6 als auch die Drosselklappenwelle 5 bestehen aus Stahl.
Entlang der an der Drosselklappenwelle 5 anliegenden Längskante des freien Endes 7 des linken Verbindungselements 6 ist dieses mittels einer durchgehenden Schweißnaht 8 mit der Drosselklappenwelle 5 fest verbunden.

Ebenfalls entlang der an der Drosselklappenwelle 5 anliegenden Längskante des freien Endes 7 des rechten Verbindungselements 6 ist dieses mittels Schweißpunkten 9 mit der Drosselklappenwelle 5 fest verbunden, die im Abstand zueinander über die ganze Länge der Längskante des freien Endes 7 des Verbindungselements 6 verteilt ausgebildet sind.

Sowohl die Schweißnaht 8 als auch die Schweißpunkte 9 sind durch Laserschweißen erzeugt.

Die dargestellte Schweißnaht 8 und die dargestellten Schweißpunkte 9 sind zwei an einer Drosselklappe 1 dargestellte alternative Möglichkeiten zur Ausbildung der Schweißverbindung. Es versteht sich, daß an einer Drosselklappe auch nur Schweißnähte 8 oder nur Schweißpunkte 9 als Schweißverbindung vorgesehen werden können.

## Patentansprüche

1. Drosselklappenanordnung zum Absperren einer Durchströmöffnung in einem Drosselklappenstutzen, insbesondere für eine Brennkraftmaschine, mit einer schwenkbar antreibbaren Drosselklappenwelle (5), die die Durchströmöffnung quer zu deren Längserstreckung durchragend mit ihren freien Enden im Gehäuse des Drosselklappenstutzens gelagert ist und mit einer fest mit der Drosselklappenwelle (5) verbundenen Drosselklappe (1), durch die die Durchströmöffnung absperrbar ist, wobei die Drosselklappe (1) eine sich in ihrer Ebene quer zur Durchströmöffnung durchgehend erstreckende Aufnahmeöffnung (4) aufweist, durch die die Drosselklappenwelle (5) hindurchgeführt ist und mit einer oder mehreren von der Durchströmöffnung zur Aufnahmeöffnung (4) durchgehenden Ausnehmungen (3) in der Drosselklappe (1), in deren Bereich die Drosselklappe (1) mit der Drosselklappenwelle (5) mittels einer schweißverbindung (8, 9) verbunden ist, **dadurch gekennzeichnet, dass** die Drosselklappe (1) im Bereich der Aufnahmeöffnung (4) nabenartig und die Aufnahmeöffnung (4) als durchgehende Nabenbohrung ausgebildet ist, in die die Drosselklappenwelle (5) eingesetzt ist, dass die Drosselklappe (1) mittels eines Spritzgießverfahrens hergestellt ist, daß das Verbindungselement (6) als Einlegeteil durch Umspritzen mit dem Material der Drosselklappe (1) bei deren Herstellung fest mit dieser verbunden ist und in die Ausnehmung (3) der Drosselklappe (1) hineinragt sowie an seinem in die Ausnehmung (3) ragenden Bereich mit der Drosselklappenwelle (5) verschweißt ist.

2. Drosselklappenanordnung nach Anspruch 1, **dadurch gekennzeichnet, dass** das verbindungselement (6) tangential zur Drosselklappenwelle (5) in die Ausnehmung (3) ragt.

3. Drosselklappenanordnung nach einem der vorhergehenden Ansprüche, **dadurch gekennzeichnet, dass** zwei Verbindungselemente.(6) mit der Drosselklappe (1) fest verbunden angeordnet sind und einander gegenläufig tangential zur Drosselklappenwelle (5) in die Ausnehmung (3) ragen.

4. Drosselklappenanordnung nach Anspruch 3, **dadurch gekennzeichnet, dass** die einander zugewandten Enden der Verbindungselemente sich zumindest annähernd berühren.

5. Drosselklappenanordnung nach einem der vorhergehenden Ansprüche, **dadurch gekennzeichnet, dass** das oder die Verbindungselemente (6) sich zumindest weitgehend über die gesamte Breite der Ausnehmung (3) in Erstreckungsrichtung der Drosselklappenwelle (5) erstrecken.

6. Drosselklappenanordnung nach einem der vorhergehenden Ansprüche, **dadurch gekennzeichnet, dass** in Erstreckungsrichtung der Drosselklappenwelle mehrere Verbindungselemente nebeneinander angeordnet sind.

7. Drosselklappenanordnung nach einem der vorhergehenden Ansprüche, **dadurch gekennzeichnet, dass** das Verbindungselement (6) ein Einlegeblech ist.

8. Drosselklappenanordnung nach einem der vorhergehenden Ansprüche, **dadurch gekennzeichnet, dass** die Drosselklappe (1) ein aus einem Leichtmetall oder aus einem Kunststoff im Spritzgießverfahren hergestelltes Bauteil ist..

9. Drosselklappenanordnung nach einem der vorhergehenden Ansprüche, **dadurch gekennzeichnet, dass** die Drosselklappenwelle (5) aus Stahl besteht.

10. Drosselklappenanordnung nach einem der vorhergehenden Ansprüche, **dadurch gekennzeichnet, dass** das Verbindungselement (6) mit seinem freien Ende unter Vorspannung an der Drosselklappenwelle (5) in Anlage ist.

11. Drosselklappenanordnung nach einem der vorhergehenden Ansprüche, **dadurch gekennzeichnet, dass** die Schweißverbindung eine durch Widerstandsschweißen oder Laserschweißen erzeugte Schmelzschweißverbindung ist.

12. Drosselklappenanordnung nach einem der vorhergehenden Ansprüche, **dadurch gekennzeichnet, dass** die Schweißverbindung eine Schweißnaht (8) oder einen oder mehrere Schweißpunkte (9) aufweist.

## Claims

1. Throttle valve arrangement for closing a through flow opening in a throttle valve connection piece, in particular for an internal combustion engine, having a pivotably actuated throttle valve shaft (5) in which the through flow opening is mounted transversely with respect to its longitudinal extent, projecting with its free ends into the housing of the throttle valve connection piece and having a throttle valve (1) which is firmly connected to the throttle valve shaft (5) and by means of which the through flow opening can be closed, the throttle valve (1) having a receiving opening (4) extending continuously in the plane of said throttle valve, transversely with respect to the through flow opening, and through which receiving opening the throttle valve shaft (5) is guided and having one or more recesses (3), continuing from the through flow opening to the receiving opening (4), in the throttle valve (1), in the region of which recesses the throttle valve (1) is connected to the throttle valve shaft (5) by means of a welded connection (8, 9), **characterized in that** the throttle valve (1) is formed in the manner of a hub in the region of the receiving opening (4), and the receiving opening (4) is formed as a continuous hub drilled hole into which the throttle valve shaft (5) is inserted, **in that** the throttle valve (1) is manufactured by means of an injection moulding method, **in that** the connecting element (6) is firmly connected to the throttle valve (1) as an insertion part by encapsulation by injection moulding using the material of the throttle valve (1) during its manufacture, and projects into the recess (3) of the throttle valve (1) and is welded, at its region projecting into the recess (3), to the throttle valve shaft (5).

2. Throttle valve arrangement according to Claim 1, **characterized in that** the connecting element (6) projects, tangentially with respect to the throttle valve shaft (5), into the recess (3).

3. Throttle valve arrangement as claimed in one of the preceding claims, **characterized in that** two connecting elements (6) are arranged firmly connected to the throttle valve (1) and project, in opposite directions to one another and tangentially with respect to the throttle valve shaft (5), into the recess (3).

4. Throttle valve arrangement as claimed in Claim 3, **characterized in that** the ends of the connecting elements which face one another are at least approximately in contact.

5. Throttle valve arrangement as claimed in one of the preceding claims, **characterized in that** the connecting element (6) or the connecting elements (6) extend at least largely over the entire width of the recess (3) in the direction of extent of the throttle valve shaft (5).

6. Throttle valve arrangement as claimed in one of the preceding claims, **characterized in that** a plurality of connecting elements are arranged one next to the other in the direction of extent of the throttle valve shaft.

7. Throttle valve arrangement as claimed in one of the preceding claims, **characterized in that** the connecting element (6) is an insertion plate.

8. Throttle valve arrangement as claimed in one of the preceding claims, **characterized in that** the throttle valve (1) is a component which is manufactured from a lightweight metal or from a plastic using an injection moulding method.

9. Throttle valve arrangement as claimed in one of the preceding claims, **characterized in that** the throttle valve shaft (5) is composed of steel.

10. Throttle valve arrangement as claimed in one of the preceding claims, **characterized in that** the connecting element (6) is in abutment with its free end against the throttle valve shaft (5) with prestress.

11. Throttle valve arrangement as claimed in one of the preceding claims, **characterized in that** the welded connection is a fused welded connection generated by resistance welding or laser welding.

12. Throttle valve arrangement as claimed in one of the preceding claims, **characterized in that** the welded connection has a welding seam (8) or one or more welding points (9).

## Revendications

1. Ensemble de papillon des gaz pour fermer une ouverture d'écoulement dans un corps de papillon, en particulier pour un moteur à combustion interne, comprenant un axe (5) de papillon pouvant être entraîné en pivotement, qui est monté par ses extrémités libres dans le boîtier du corps de papillon en traversant l'ouverture d'écoulement transversalement au développement longitudinal de cette ouverture, et comprenant un papillon (1) fixement assemblé à l'axe (5) de papillon et permettant de fermer l'ouverture d'écoulement, le papillon (1) ayant une ouverture (4) réceptrice continue, s'étendant dans son plan transversalement à l'ouverture d'écoulement et à travers laquelle est guidé l'axe (5) de papillon, et comportant dans le papillon (1 ) un ou plusieurs évidements (3) s'étendant depuis l'ouverture d'écoulement jusqu'à l'ouverture (4) réceptrice, évidements dans la région desquels le papillon (1) est assemblé à l'axe (5) de papillon au moyen d'un assemblage (8, 9) soudé, **caractérisé en ce que** le papillon (1) est réalisé en forme de moyeu dans la région de l'ouverture (4) réceptrice et l'ouverture (4) réceptrice est réalisée sous forme d'alésage continu de moyeu dans lequel est inséré l'axe (5) de papillon, **en ce que** le papillon (1) est réalisé par moulage par injection et **en ce que** l'élément (6) d'assemblage est réalisé sous la forme d'une pièce d'insertion qui est fixement assemblée au papillon (1) lors de la fabrication de ce dernier en étant enrobée par injection par le matériau du papillon (1), et il s'enfonce dans l'évidement (3) du papillon (1) et est, dans sa région dépassant dans l'évidement (3), assemblé par soudage à l'axe (5) de papillon.

2. Ensemble de papillon des gaz suivant la revendication 1, **caractérisé en ce que** l'élément (6) d'assemblage dépasse dans l'évidement (3) tangentiellement à l'axe (5) de papillon.

3. Ensemble de papillon des gaz suivant l'une des revendications précédentes, **caractérisé en ce que** deux éléments (6) d'assemblage sont fixement assemblés au papillon (1) et dépassent dans l'évidement (3) tangentiellement à l'axe (5) de papillon en sens contraires.

4. Ensemble de papillon des gaz suivant la revendication 3, **caractérisé en ce que** les extrémités en vis-à-vis des éléments d'assemblage se touchent au moins approximativement.

5. Ensemble de papillon des gaz suivant l'une des revendications précédentes, **caractérisé en ce que** le ou les éléments (6) d'assemblage s'étendent au moins sensiblement sur toute la largeur de l'évidement (3) dans la direction de développement de l'axe (5) de papillon.

6. Ensemble de papillon des gaz suivant l'une des revendications précédentes, **caractérisé en ce que** plusieurs éléments d'assemblage s ont disposés les uns à côté d es a utres dans la d irection d e développement de l'axe de papillon.

7. Ensemble de papillon des gaz suivant l'une des revendications précédentes, **caractérisé en ce que** l'élément (6) d'assemblage est une tôle d'insertion.

8. Ensemble de papillon des gaz suivant l'une des revendications précédentes, **caractérisé en ce que** le papillon (1) est un élément réalisé en un métal léger ou en une matière plastique par moulage par injection.

9. Ensemble de papillon des gaz suivant l'une des revendications précédentes, **caractérisé en ce que** l'axe (5) de papillon e st réalisé en acier.

10. Ensemble de papillon des . gaz suivant l'une des revendications précédentes, **caractérisé en ce que** l'élément (6) d'assemblage est, par son extrémité libre, appliqué sous précontrainte contre l'axe (5) de papillon.

11. Ensemble de papillon des gaz suivant l'une des revendications précédentes, **caractérisé en ce que** l'assemblage soudé est un assemblage soudé par fusion réalisé par soudage électrique par résistance ou par soudage au laser.

12. Ensemble de papillon des gaz suivant l'une des revendications précédentes, **caractérisé en ce que** l'assemblage soudé comporte un cordon (8) de soudure ou un ou plusieurs points (9) de soudure.
